Europäisches Patentamt

European Patent Office

Office européen des brevets

(11) Numéro de publication: **0 237 390**
**A1**

# (12) DEMANDE DE BREVET EUROPEEN

(21) Numéro de dépôt: **87400310.6**

(22) Date de dépôt: **12.02.87**

(51) Int. Cl.4: **G 01 F 1/36**
G 01 F 15/075, G 01 F 1/50

(30) Priorité: **14.02.86 FR 8602012**

(43) Date de publication de la demande:
**16.09.87 Bulletin 87/38**

(84) Etats contractants désignés:
**AT BE CH DE ES FR GB GR IT LI LU NL SE**

(71) Demandeur: **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)**

(72) Inventeur: **Cuny, Francis
6, rue du Général de Gaulle
F-78250 Mezy-sur-Seine (FR)**

**Vermeille, Hugues
14, rue Champ Rochas
F-38240 Meylan (FR)**

**Arnault, Jean
Cidex 339
F-38330 Saint-Nazaire-les-Eymes (FR)**

(74) Mandataire: **Vesin, Jacques et al
L'AIR LIQUIDE, SOCIETE ANONYME POUR L'ETUDE ET
L'EXPLOITATION DES PROCEDES GEORGES CLAUDE
75, quai d'Orsay
F-75321 Paris Cédex 07 (FR)**

(54) **Procédé de contrôle du débit d'un fluide dans une vanne et appareil pour la mise en oeuvre de ce procédé.**

㊼ Procédé de contrôle du débit d'un fluide à travers une vanne de section déterminée à clapet mobile, dans lequel on mesure les pressions du fluide en amont $P_{amont}$ et en aval $P_{aval}$, de la vanne ainsi que la position d du clapet, puis l'on calcule le débit réel $Q_{réel}$ du fluide que l'on compare à une valeur de consigne $Q_0$, le signal de différence $Q_{réel} - Q_0$ commandant le dépacement du clapet dans le sens voulu, caractérisé en ce que l'étape de calcul du débit réel s'effectue en mesurant le rapport $R = P_{amont}/ P_{aval}$ que l'on compare à une valeur $R_0$ prédéterminée et en calculant le produit $Q_{sonique} = k \times P_{amont} \times d$, de sorte que lorsque $R > R_0$, le produit $Q_{sonique}$ est directement comparé à une valeur de consigne $Q_0$, le signal de différence $Q_{sonique} - Q_0$ commandant le déplacement du clapet dans le sens voulu tandis que lorsque $R < R_0$, le rapport R est converti en un signal numérique dont la valeur correspond à l'adresse d'une mémoire dont le contenu est transformé en un signal analogique de correction qui, après multiplication par $Q_{sonique}$, représente une valeur proportionnelle au débit $Q_{subsonique}$ du fluide en régime subsonique, cette valeur $Q_{subsonique}$ étant alors comparée à la valeur de consigne $Q_0$, le signal $Q_{subsonique} - Q_0$ commandant le déplacement du clapet dans le sens voulu.

EP 0 237 390 A1

**Description**

La présente invention concerne un procédé de contrôle du débit en régime sonique et subsonique d'un fluide à travers une vanne de section déterminée à clapet mobile, dans lequel on mesure les pressions de fluide en amont de la vanne $P_{amont}$ et en aval de la vanne $P_{aval}$, ainsi que la position d du clapet, puis l'on calcule le débit $Q_{réel}$ du fluide que l'on compare à une valeur de consigne, $Q_0$, le signal de différence $Q_{réel} - Q_0$ commandant le déplacement du clapet dans le sens voulu.

L'invention concerne également un appareil pour la mise en oeuvre de ce procédé, cet appareil est utilisable à la fois en régimes sonique et subsonique, sans discontinuité.

Il est connu de la demande de brevet européen 86.259 un générateur de débit de gaz comportant un orifice traversé par le gaz s'écoulant d'une chambre amont, où règne une pression amont dans une chambre aval où règne une pression aval, cet orifice étant plus ou moins obturé par un clapet mobile commandé électriquement. Ce clapet libère un passage de surface déterminée par sa position. On mesure celle-ci pour obtenir un premier signal électrique et on mesure également la différence entre la pression amont et la pression aval pour fournir un second signal électrique représentant cette différence de pression. Ces deux signaux sont appliqués aux deux entrées respectives d'un circuit électrique de calcul qui fournit à sa sortie un signal correspondant au débit effectif du gaz. Ce dernier signal peut alors être comparé à un signal de consigne, et le signal d'erreur résultant peut être utilisé pour commander le déplacement du clapet dans le sens déterminé.

Des systèmes analogues sont également décrits dans l'article SIEMENS-ZEITSCHRIFT, vol. 41, no 8, août 1967, pages 692-695, Erlangen ; KURT EWE: "Betriebserprobung eines Segmentblendenschiebers als Meßgeber und Stellglied für Durchflüsse in extrem großen Berichen", ainsi que dans l'article REGELUNGS-TECHNISCHE PRAXIS, vol. 19, no 4, avril 1977, pages M17-M20, R. Oldenbourg Verlag, Munich ; G. STROHRMANN : "Lösungen von MSR-Aufgaben".

Dans l'article de la revue CONTROL ENGINEERING, vol. 10, no 9, septembre 1963, pages 101-105, New York (USA) de G. HARTER, intitulé "Gaz flow control : a fresh viewpoint", est décrit un système de contrôle du débit de fluide, dans lequel on mesure les pressions amont et aval du fluide par rapport à une vanne, ainsi que la température amont du fluide, on mesure également la position du clapet mobile de la vanne, celle-ci ayant une section constante. Ces quatre données sont envoyées à un calculateur dans lequel, suivant les conditions du débit du fluide (régime sonique ou subsonique) on calcule, en fonction d'équations données dans ledit article, le débit réel du fluide à travers la vanne, le signal résultant, issu du calculateur, étant comparé à une valeur de consigne, le signal d'erreur issu de la comparaison permettant d'agir sur le clapet mobile dans le sens voulu.

Bien qu'un tel système soit performant, il se révèle particulièrement lourd concernant les moyens à mettre en oeuvre. En effet, le calculateur utilisée doit déterminer tout d'abord dans ou l'autre des cas, calculer le débit en fonction des paramètres qui lui sont donnés à l'aide des équations correspondantes. La valeur trouvée est ensuite comparée à la valeur de consigne selon un système d'asservissement classique de la position du clapet à la valeur mesurée. Ainsi par exemple pour le même gaz et les mêmes conditions d'utilisation, le calculateur doit périodiquement recalculer le débit ce qui conduit à réaliser la même opération, en nombre infini.

Le procédé selon l'invention permet de simplifier considérablement la méthode de calcul du débit et par conséquent de simplifier églament considérablement les moyens pour la mise en oeuvre.

L'invention s'appuie sur le fait que l'on peut calculer dans tous les cas de régime sonique ou subsonique de débit de fluide, une valeur correspondant à la valeur du débit en régime sonique, puis appliquer à cette valeur calculée un coefficient de correction lorsque l'on a déterminé que le régime d'écoulement des gaz était subsonique.

L'idée mère de l'invention consiste tout d'abord à calculer le débit de gaz à travers la vanne en fonction de la position du clapet et de la pression en amont de la vanne du fluide, en supposant que le débit du fluide est sonique, le calcul étant en ce cas aisé. On détermine ensuite, par comparaison des pressions aval et amont un fluide, si le débit est sonique ou subsonique. Dans le cas où le débit est sonique la valeur du débit est déjà calculée. Dans le cas où le débit est subsonique, on multiplie la valeur du débit sonique par un coefficient de correction que l'on va prélever dans une mémoire, l'adresse de cette mémoire étant une fonction bi-univoque du rapport entre les pressions amont et aval du fluide.

Le procédé selon l'invention est caractérisé en ce que l'on calcule le débit $Q_{réel}$ en effectuant tout d'abord le produit $Q_{sonique} = k \times P_{amont} \times d$, représentant le débit réel du fluide lorsque le régime d'écoulement de celui-ci est sonique, k étant une constante fonction de la température du fluide et de la section de la vanne, puis on compare la pression amont $P_{amont}$ à la pression aval $P_{aval}$ afin de déterminer si le fluide est en régime d'écoulement sonique ou subsonique, le débit $Q_{sonique}$ représentant le débit réel lorsque le régime d'écoulement est sonique tandis que lorsque le régime d'écoulement est subsonique, on multiplie la valeur $Q_{sonique}$ par une coefficient de correction, de manière à obtenir la valeur $Q_{réel}$ du débit réel.

De préférence, on utilisera un système de correction au régime subsonique utilisant la loi d'écoulement gazeuse exprimée sous la forme :

$$Q = \frac{K}{\sqrt{T}} \times S \times P_{amont} \sqrt{\frac{1}{M} \times \frac{\gamma}{\gamma - 1} \left[ \left( \frac{Pam}{Pav} \right)^{-\frac{2}{\gamma}} - \left( \frac{Pam}{Pav} \right)^{-\frac{\gamma + 1}{\gamma}} \right]}$$

et dans laquelle les différentes valeurs prises par le radical lorsque $P_{amont}/P_{aval}$ varie sont rangées d'une façon discrète et ordonnée dans une mémoire de lecture ou de lecture programmable (ROM ou EPROM).

Selon une variante de réalisation préférentielle, la valeur du radical mentionné plus haut est directement issue de la case mémoire dont l'adresse est égale à $P_{amont}/P_{aval} \times B$, B étant un coefficient prédéterminé. Lâ valeur de ce coefficient dépend bien entendu du nombre de cases mémoires disponibles. En particulier, compte tenu du fait que $P_{amont}/P_{aval}$ est supérieur ou égal à 1 (puisque si cette condition n'était pas vérifiée il n'y aurait pas d'écoulement dans le sens souhaité), le coefficient B représentera l'adresse de la première case mémoire utilisée.

Lors d'un écoulement gazeux s'effectuant à travers une canalisation de section efficace S, le débit de gaz ne dépend pas de la pression aval du gaz lorsque le rapport de la pression amont (absolue) à la pression aval (absolue) $X = P_{amont}/P_{aval}$ est supérieur à une valeur critique fixe

$$X_C = \left( \frac{\gamma + 1}{2} \right)^{\frac{\gamma}{\gamma - 1}}$$

étant le rapport des chaleurs spécifiques à pression constante et à volume constant

$$\left( \gamma = \frac{c_P}{c_V} \right)$$

Dans ce cas, le débit de gaz, sonique, à travers la canalisation est égal à :

$$Q_{sonique} = \frac{K}{\sqrt{T}} \times S \times P_{amont} \times f(\gamma, M)$$

expression dans laquelle

$$f(\gamma, M) = \sqrt{\frac{\gamma}{M(\gamma + 1)} \left( \frac{2}{\gamma + 1} \right)^{\frac{2}{\gamma - 1}}}$$

Dans ces conditions, le débit de gaz est dit en régime sonique, K étant un coefficient fonction de la géométrie du système de mesure, T la température absolue, M la masse moléculaire du gaz.

Lorsque le rapport des pressions devient inférieur à la valeur critique $X_c$, le débit des gaz, subsonique, dans la même canalisation est donnée par la formule suivante :

$$Q_{subsonique} = \frac{K}{\gamma \cdot T} \times S \times P_{amont} \times f(\gamma, M) \times g(\gamma, X)$$

avec

$$f(\gamma, M) = \sqrt{\frac{\gamma}{M(\gamma + 1)} \times \left(\frac{2}{\gamma + 1}\right)^{\frac{2}{\gamma - 1}}}$$

et

$$g(\gamma, X) = \sqrt{\frac{\gamma + 1}{\gamma - 1} \left(\frac{\gamma + 1}{2}\right)^{\frac{2}{\gamma - 1}} \left(X^{-\frac{2}{\gamma}} - X^{-\frac{\gamma + 1}{\gamma}}\right)}$$

Lorsque X est inférieur à $X_c$, le régime est dit subsonique.

Lorsque $X = X_c$, on vérifie que $g(\gamma, X) = 1$.

Dans la formule du régime subsonique donné plus haut, il apparaît clairement que ce débit subsonique est égal à la valeur du débit sonique multiplié par un coefficient de correction $g(\gamma, X)$.

L'invention sera mieux comprise à l'aide des exemples de réalisation suivant, donnés à titre non limitatif, qui représentent :

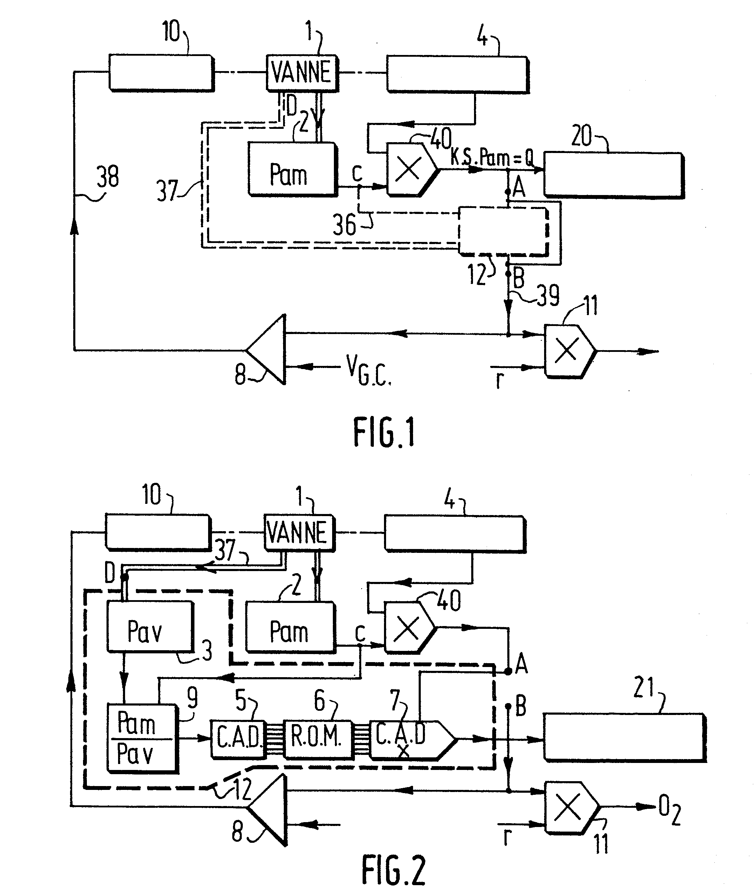

. La figure 1 une vue schématique de réalisation du procédé selon l'invention ;

. La figure 2 une vue détaillée du schéma de la figure 1 ;

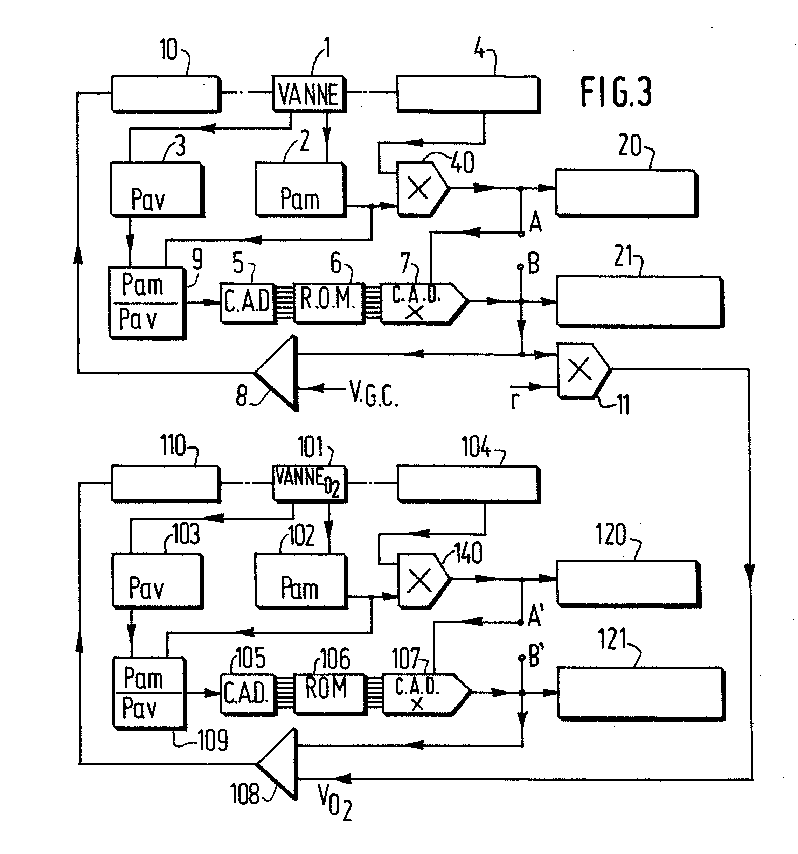

. La figure 3 un exemple d'application à la régulation d'un brûleur oxycombustible ;

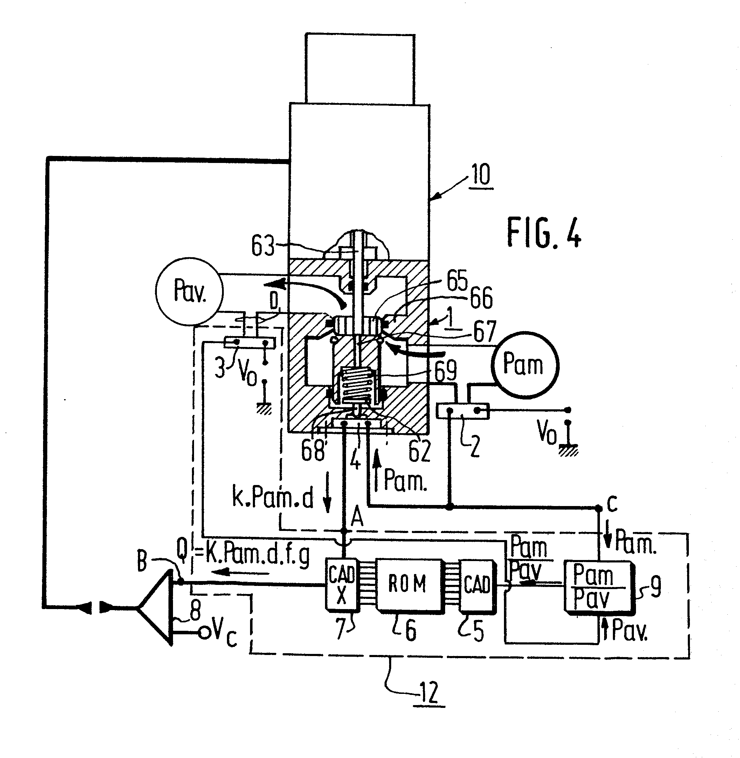

. La figure 4 un exemple de réalisation pratique avec un système utilisant des cellules de pression à pont de jauge ;

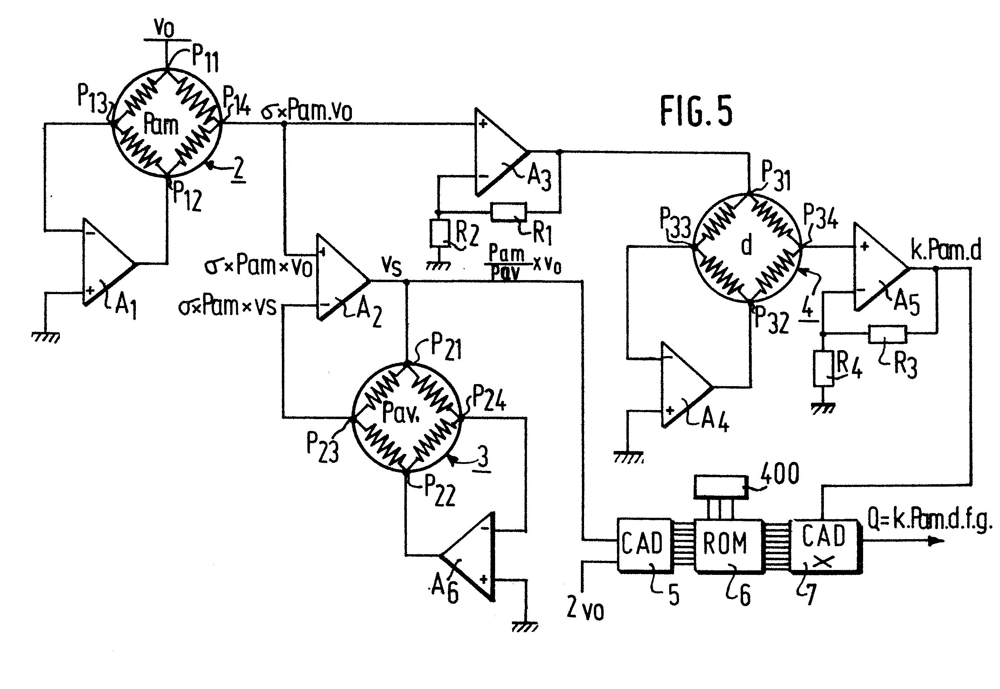

. La figure 5 le circuit électrique de commande des cellules à pont de jauge représentées sur la figure 4.

Sur la figure 1, est représentée une vue schématique du système selon l'invention. La vanne 1 dont le débit doit être régulé est reliée à un capteur de déplacement 4 mesurant le déplacement du clapet mobile de la vanne 1, ainsi qu'à un capteur de pression 2 mesurant la pression en amont de la vanne 1. Les signaux électriques issus des capteurs 2 et 4 sont envoyés à un circuit multiplicateur 40 qui délivre un signal $Q = K \times S \times P$ amont. Ce signal représente la valeur du débit de gaz en régime sonique, valeur affichée par le dispositif 20. Cette valeur mesurée du débit $Q_{sonique}$ est transmise par la ligne 39 (via la connexion en trait plein entre A et B) à un circuit comparateur 8 comparant cette valeur mesurée à une valeur de consigne $V_{GC}$, le signal d'erreur délivré par l'amplificateur 8 étant transmis (via 38) au dispositif d'actionnement 10 qui agit mécaniquement sur le clapet de la vanne 1 engendrant une variation de débit dans le sens voulu (selon le principe habituel d'une régulation). Le dispositif de correction selon l'invention, qui permet de multiplier le débit $Q_{sonique}$ calculé par un coefficient de correction lorsque le débit de gaz devient subsonique, est indiqué par le repère 12 et est inséré entre A et B sur la ligne 39 (la connexion en trait plein entre A et B étant alors supprimée). Ce dispositif 12 comporte un capteur de pression $P_{aval}$ qui mesure le pression du gaz en aval de la vanne, gaz qui est envoyé sur le dispositif 12 par la canalisation schématisée en pointillés selon le repère 37. Le dispositif 12 reçoit également une information de pression P amont via la connexion électrique 36 insérée en C. Il est à noter que le dispositif de la figure 1 comporte également un circuit multiplicateur 11 dans lequel le débit Q est envoyé et comparé à une valeur de consigne r qui est le rapport obtenu en divisant le débit de gaz oxygène par le débit de gaz combustible (lorsque ces deux gaz sont utilisés par exemple dans un brûleur oxycombustible). Bien entendu, le multiplicateur 11 peut être supprimé lorsqu'il s'agit d'appliquer l'invention uniquement à la régulation d'une vanne de débit 1.

La figure 2 représente une vue plus détaillée de la figure 1, en particulier en ce qui concerne le dispositif 12. Sur cette figure, les mêmes éléments que ceux de la figure 1 portent les mêmes références. La valeur du débit calculé Q au point A est transmise à un convertisseur numérique analogique multiplicateur 7. La canalisation 37 (point D) conduit le gaz en aval de la vanne sur un capteur de pression $P_{aval}$ portant la référence 3. Ce capteur 3 délivre un signal électrique proportionnel à la pression aval du gaz au circuit 9 dont l'autre entrée reçoit un signal électrique proportionnel à la pression $P_{amont}$ du gaz en amont de la vanne. Le dispositif 9 est un diviseur effectuant le rapport $P_{amont}/P_{aval}$, et délivrant un signal électrique proportionnel à ce rapport, au convertisseur analogique numérique 5. Ce convertisseur transforme le signal analogique $P_{amont}/P_{aval}$ en un signal numérique correspondant à une des adresses mémoire de la mémoire (du type ROM = Read Only Memory) 6. Par exemple, si l'on dispose de 128 cases mémoire, le convertisseur délivrera un signal entre 0 et 127, permettant ainsi d'accéder à l'une des cases mémoires de la mémoire 6. Si la mémoire comporte $2^n$ cases mémoire, le convertisseur 5 transformera le signal $P_{amont}/P_{aval}$ en une valeur numérique comprise entre 0 et $2^n - 1$. Le convertisseur 5 est relié électriquement à la mémoire 6, permettant ainsi d'accéder à l'une des cases de cette mémoire comme explicité précédemment. Lorsque cette case mémoire est activée, le contenu de celle-ci est transféré au circuit 7 qui est un convertisseur numérique analogique multiplicateur. Ainsi, le contenu de la mémoire 7 est tout d'abord transformé en un signal analogique, représentant la valeur du coefficient de correction, puis ledit dispositif 7 effectue le produit du débit $Q_{sonique}$ qui lui est envoyé via le point A et du coefficient de correction issu de la mémoire, sous forme analogique, délivrant ainsi un signal analogique dont l'amplitude représente la valeur réelle du débit à travers la vanne. Ce débit est envoyé pour affichage au dispositif 21 ainsi qu'à l'amplificateur 8 qui comme précédemment compare cette valeur calculée à une valeur de consigne et agit sur l'actionneur 10, lui-même commandant le déplacement du clapet de la vanne 1 dans le sens voulu.

La figure 3 représente un schéma d'application dans le cas d'utilisation par exemple d'un brûleur oxycombustible nécessitant la régulation du débit du combustible et de l'oxygène. Sur cette figure 3, on constatera que la partie supérieure de la figure est identique au schéma de la figure 2, tandis que la partie inférieure est sensiblement la même (les chiffres de la partie haute se retrouvent dans la partie basse avec un 1 devant). Le débit mesuré dans la vanne de gaz combustible 1 est envoyé au circuit multiplicateur 11 qui, en fonction de la valeur de consigne r représentant le rapport des débits de gaz combustible/oxygène délivre un signal de consigne à l'amplificateur 108, signal de consigne $V_{02}$. Ce signal représente la valeur de consigne pour le débit en oxygène de la vanne d'oxygène 101. Le fonctionnement de l'ensemble du circuit représenté sur ce schéma est le même que précédemment.

La figure 4 représente un exemple d'application du schéma de la figure 1 avec une vanne 1 dont le déplacement du clapet est mesuré par un capteur de pression 4. Les trois capteurs de pression utilisés sur ce schéma, à savoir les capteurs 2, 3 et 4, sont semblables et sont des cellules de pression constituées d'une membrance céramique sur laquelle un pont de jauge a été déposé par sérigraphie (dépôt en couche épaisse). Cette membrane est encastrée à l'aide de verre, à haute température, sur une embase en céramique. Le pont de jauge de contrainte est alimenté électriquement entre deux extrémités du pont tandis qu'aux deux autres extrémités, on mesure la tension, qui varie en fonction de la pression appliquée sur le capteur, cette pression faisant varier la résistance des éléments du capteur. Ainsi, sous l'action du dispositif d'actionnement 10, la tige 63 se déplace vers le haut ou vers le bas, entraînant avec elle le clapet 65, qui se dégage plus au moins du siège 66 permettant ainsi de moduler le débit de gaz dans la direction des flèches indiquées sur la figure. Lors du déplacement du clapet 65, celui-ci actionne le ressort 69 qui s'appuie sur le flasque 62 solidaire du doigt 68 qui vient s'appuyer sur le capteur de pression 4. Lors d'un déplacement vers le bas (sur la figure) du clapet 65, le doigt 68 augmente sa pression sur le capteur 4, modifiant ainsi la résistance du pont de jauge 4. De la même manière, un déplacement du clapet 65 vers le haut entraîne un allégement de la pression de l'extrémité 68 d'où une modification corrélative des résistances du pont de jauge 4. L'information électrique issue du capteur 2 et représentant la valeur de la pression $P_{amont}$, est envoyée sur les bornes d'alimentation du capteur 4, engendrant donc sur ses bornes de sortie un signal électrique proportionnel au produit de la pression $P_{amont}$ et du déplacement d du clapet, cette proportionnalité étant représentée par le coefficient K. (c'est une particularité des capteurs de pression à pont de jauge utilisés que de délivrer un signal de sortie proportionnel à la pression et à la tension d'alimentation).

Comme précédemment, cette information est transmise via l'entrée A du dispositif 12, au dispositif 7 qui délivre un signal

$Q = K(P_{amont}) \times D \times f \times g$

(voir plus haut la signification de ces différentes fonctions).

La figure 5 représente une vue détaillée du circuit électrique de commande des capteurs 2, 3 et 4 adapté au fonctionnement du dispositif selon l'invention. Le capteur de pression $P_{amont}$ 2 est schématisé par ses quatre résistances montées en pont. La tension d'alimentation $V_0$ est appliquée au point $P_{11}$ tandis que le point $P_{12}$ du pont en vis-à-vis de $P_{11}$ est relié à la sortie de l'amplificateur opérationnel $A_1$ dont le + est à la masse. Le - de cet amplificateur est relié à l'entrée $P_{13}$ du pont dont l'entrée opposée $P_{14}$ délivre le signal électrique $\gamma \times P_{amont} \times V_0$. ($\gamma$ = sensibilité du pont). Ce signal est délivré d'une part à l'entrée + de l'amplificateur comparateur $A_2$, d'autre part à l'entrée + de l'amplificateur opérationnel $A_3$, ce dernier étant monté classiquement à l'aide du pont de résistance $R_2$ et $R_1$ branché entre la masse et la sortie de $A_3$ et dont le point commun est connecté à l'entrée -. La sortie de l'amplificateur $A_3$ est reliée au capteur de pression 4 par son entrée $P_{31}$ dont l'entrée opposée $P_{32}$ est reliée à la sortie de l'amplificateur $A_4$ dont le + est à la masse, tandis que le - de $A_4$ est relié à l'entrée $P_{33}$ du pont 4 dont l'entrée opposée $P_{34}$ délivre un signal électrique à l'entrée + de l'amplificateur $A_5$. Le pont de résistance $R_3$, $R_4$ étant connecté entre son entrée - et sa sortie. La sortie de cet amplificateur comparateur $A_5$ délivre un signal $K \times P_{amont} \times D$ au convertisseur numérique analogique multiplicateur 7. Par ailleurs, la sortie de l'amplificateur $A_2$ est reliée à l'entrée $P_{21}$ du capteur de pression aval 3 dont l'entrée opposée $P_{22}$ est reliée à la sortie de l'amplificateur $A_6$ dont le + est à la masse et dont le - est relié à l'entrée $P_{24}$ du capteur 3 dont l'entrée opposée $P_{23}$ est elle-même connectée à l'entrée négative de $A_2$. Ainsi, la sortie de l'amplificateur $A_2$ délivre-t-elle un signal $P_{amont}/P_{aval} \times V_0$ sur l'entrée du convertisseur analogique numérique 5 puisque le capteur 3 est du type délivrant un signal de sortie entre $P_{23}$ et $P_{24}$ proportionnel d'une part à la pression aval du fluide et d'autre part à la tension d'alimentation entre $P_{21}$ et $P_{22}$. Le convertisseur 5 comporte une valeur de référence portée dans le cas présent à $2V_0$. En effet, lorque $P_{amont}/P_{aval}$ est supérieur sensiblement à 2, le débit devient sonique et dans ces conditions le coefficient de correction G est égal à 1. On résout donc ainsi simplement le passage du régime subsonique au régime sonique de la manière suivante. $P_{amont}/P_{aval}$ étant toujours supérieur ou égal à 1, le produit $P_{amont}/P_{aval} \times V_0$ est toujours supérieur à $V_0$. Compte tenu du fait que la valeur de référence à l'entrée du convertisseur analogique numérique 5 est $2V_0$, ceci veut dire que ce convertisseur va transformer toute valeur analogique en entrée comprise entre 0 et $2V_0$ en une valeur numérique. Dans l'application présente, aucune valeur entre 0 et $V_0$ ne sera présente à l'entrée du convertisseur. Ceci entraîne que toutes les cases mémoire correspondantes dans la mémoire ROM 6 ne sont pas utilisées. Chaque valeur entre $V_0$ et $2V_0$, suivant le rapport multiplicateur $P_{amont}/P_{aval}$, est transformée à l'aide du convertisseur 5 en une valeur numérique. Si l'on dispose de $2^n$ niveaux mémoire entre $V_0$ et $2V_0$, le niveau entre deux mesures successives ne pourra être inférieur à $1/2^n$ en excluant zéro et on arrondira à la valeur inférieure ou à la valeur supérieure la plus proche. Le dispositif de la figure 5 comporte également un commutateur de gaz 400. En effet, on peut prévoir également un nombre de gaz déterminé. Par exemple, dans le cas illustré sur la figure, le commutateur 400 permet de selectionner un parmi huit gaz (sélection sur trois bits). De cette manière, il sera nécessaire d'avoir une mémoire que l'on adresse d'une part à partir des trois bits donnés par le sélecteur de gaz et d'autre part par le nombre de bits délivrés par le convertisseur 5 (par exemple huit dans l'exemple donné ci-dessus), le coefficient de correction à appliquer ayant donc une adresse de 11 bits. (Cas d'une mémoires de 16K bits). Le coefficient de correction délivré au convertisseur 7 peut être un signal de huit bits qui, après les transformations explicitées plus haut permet au convertisseur 7, de délivrer un signal $Q = K \times P_{amont} \times D \times f \times g$.

## Revendications

1. - Procédé de contrôle du débit en régime sonique et subsonique d'un fluide à travers une vanne de section déterminée à clapet mobile, dans lequel on mesure les pressions du fluide en amont de la vanne $P_{amont}$ et en aval de la vanne $P_{aval}$, ainsi que la position d du clapet, puis l'on calcule le débit $Q_{réel}$ du fluide que l'on compare à une valeur de consigne $Q_0$, le signal de différence $Q_{réel} - Q_0$ commandant le déplacement du clapet dans le sens voulu, caractérisé en ce que l'on calcule le débit $Q_{réel}$ en effectuant tout d'abord le produit $Q_{sonique} = k \times P_{amont} \times d$ représentant le débit réel du fluide lorsque le régime d'écoulement de celui-ci est sonique, k représentant une constante fonction de la température du fluide et de la section de la vanne, puis on compare la pression amont $P_{amont}$ à la pression aval $P_{aval}$ afin de déterminer si le fluide est en régime d'écoulement sonique ou subsonique, le débit $Q_{sonique}$ représentant le débit réel $Q_{réel}$ lorsque le régime d'écoulement est sonique tandis que lorsque cet écoulement est subsonique, on multiplie la valeur $Q_{sonique}$ par un coefficient de correction, de manière à obtenir la valeur $Q_{réel}$ du débit réel.

2. - Procédé selon la revendication 1, caractérisé en ce que le coefficient de correction approprié est sélectionné dans une case mémoire dont l'adresse est fonction de la valeur mesurée $P_{amont}/P_{aval}$.

3. - Procédé selon la revendication 1 ou 2, caractérisé en ce que l'étape de calcul du débit réel s'effectue en mesurant le rapport $R = P_{amont}/P_{aval}$ que l'on compare à une valeur $R_0$ prédéterminée et en calculant le produit $Q_{sonique} = k \times P_{amont} \times d$, de sorte que lorsque $R > R_0$, le produit $Q_{sonique}$ est directement comparé à une valeur de consigne $Q_0$, le signal de différence $Q_{sonique} - Q_0$ commandant le déplacement du clapet dans le sens voulu tandis que lorsque $R < R_0$, le rapport R est converti en un signal numérique dont la valeur correspond à l'adresse d'une mémoire contenant une valeur numérique qui est transformée en un signal analogique de correction qui, après multiplication par $Q_{sonique}$, représente une valeur proportionnelle au débit $Q_{subsonique}$ du fluide en régime subsonique, cette valeur $Q$ subsonique étant alors comparée à la valeur de consigne $Q_0$, le signal $Q_{subsonique} - Q_0$ commandant le déplacement du clapet dans le sens voulu.

4. - Procédé selon l'une des revendications 1 à 3, caractérisé en ce que l'on mesure une variation de pression sur un capteur de pression en liaison mécanique avec le clapet de la vanne pour déterminer les variations de position de la vanne.

5. - Procédé selon l'une des revendications 1 à 4, caractérisé en ce que, pour obtenir directement un rapport proportionnel à $P_{amont}/P_{aval}$, on utilise des capteurs de pression à pont de jauge pour mesurer $P_{amont}$ et $P_{aval}$, le signal électrique délivré entre les deux bornes opposées de sortie du pont étant proportionnel d'une part à la tension d'alimentation entre les deux bornes d'alimentation du pont et d'autre part à la pression mesurée par le capteur.

6. - Dispositif pour la mise en oeuvre du procédé selon l'une des revendications 1 à 5, caractérisé en ce qu'il comporte une vanne (1), dont le débit doit être régulé, reliée à un capteur de déplacement (4) mesurant le déplacement d du clapet mobile (10), un capteur de pression (2) mesurant la pression $P_{amont}$ en amont de la vanne (1), des moyens pour calculer le produit $Q_{sonique} = k \times P_{amont} \times d$, un capteur de pression (3) mesurant le pression $P_{aval}$ en aval de la vanne (1), des moyens (9) pour calculer le rapport $P_{amont}/P_{aval}$, des moyens (9) pour comparer le rapport $P_{amont}/P_{aval}$ à une valeur critique $X_c$, des moyens de correction (5, 6, 7) de la valeur $Q_{sonique}$ lorsque $P_{amont}/P_{amont}/P_{aval}$ est inférieur à $X_c$ délivrant un signal $Q_{réel}$ qui est ensuite comparé à une valeur de consigne $V_c$ à l'aide de moyens de comparaison (8) délivrant un signal de commande au dispositif (10) d'actionnement du clapet de la vanne.

7. - Dispositif selon la revendication 6, caractérisé en ce que les moyens de correction de la valeur $Q_{sonique}$ sont constitués par des moyens de mémoire (6) contenant dans leurs différentes cases de mémoire des coefficients de correction, l'adresse de ces cases mémoires étant donnée par le rapport $P_{amont}/P_{aval}$.

8. - Dispositif selon la revendication 7, caractérisé en ce que la mémoire (6) est une mémoire numérique et comporte des moyens d'entrée pour convertir le signal analogique $P_{amont}/P_{aval}$ en une valeur numérique et de moyens de sortie pour convertir le signal numérique de sortie de la mémoire en un signal analogique.

9. - Dispositif selon l'une des revendications 6 à 8, caractérisé en ce que les moyens pour calculer le rapport $P_{amont}/P_{aval}$ comportent deux capteurs de pression (2, 3) $P_{amont}$ et $P_{aval}$ sous forme de pont de jauges de contraintes, le pont (2) mesurant $P_{amont}$ étant alimenté par une tension Vo et délivrant un signal $\gamma \times P_{amont} \times Vo$, $\gamma$ étant la sensibilité du pont, ce signal étant envoyé sur une première entrée d'un amplificateur opérationnel $A_2$ dont la seconde entrée reçoit le signal issu du second pont (3) $P_{aval}$ alimenté par la tension de sortie Vs dudit amplificateur opérationnel $A_2$, ce signal étant égal à $\gamma \times P_{aval} \times Vs$, de sortie que le signal de sortie Vs de l'amplificateur opérationnel est égal à $P_{amont}/P_{aval} \times Vo$.

FIG.1

FIG.2

0237390

FIG.3

FIG. 4

FIG.5

$v_0$

$P_{11}$

$P_{13}$  Pam  $P_{14}$  $\sigma \times Pam.v_0$

$P_{12}$

$\underline{2}$

$A_1$

$\sigma \times Pam \times v_0$

$\sigma \times Pam \times v_s$

$A_2$  $v_s$

$A_3$

$R_2$  $R_1$

$\dfrac{Pam}{Pav} \times v_0$

$P_{21}$

Pav.  $P_{24}$

$P_{23}$

$\underline{3}$

$P_{22}$

$A_6$

$P_{31}$

$P_{33}$  d  $P_{34}$

$P_{32}$  $\underline{4}$

$A_5$  $k.Pam.d$

$R_4$  $R_3$

$A_4$

400

CAD  ROM  CAD  $Q = k.Pam.d.f.g.$

$2v_0$  $\underset{5}{}$  $\underset{6}{}$  $\underset{7}{}$

0237390

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 241 783  (GENERAL MOTORS CORP.) <br> * Pages 1-3, en entier; page 4, ligne 31 - page 5, ligne 32; page 9, ligne 26 - page 12, ligne 20 * | 1-3 | G 01 F   1/36 <br> G 01 F  15/075 <br> G 01 F   1/50 |
| A | | 6,7 | |
| | --- | | |
| Y | US-A-3 524 344  (V.G.CONVERSE, III et al.) <br> * Colonne 5, lignes 13-42; colonne 11, lignes 57-64 * | 1,3,6 | |
| A | | 4,5 | |
| | --- | | **DOMAINES TECHNIQUES RECHERCHES (Int. Cl.4)** |
| Y | EP-A-0 061 856  (LUCAS INDUSTRIES LTD.) <br> * Résumé; figures; Page 1, alinéa 2 * | 1,3,6 | G 01 F |
| X | | 2,7,8 | |
| | --- | | |
| A | FR-A-2 447 012  (ETABLISSEMENTS FAURE-HERMAN) <br> * Page 2, ligne 19 - page 3, ligne 9; page 5, lignes 22-29 * | 1-3,7, 8 | |
| | --- | -/- | |

Le présent rapport de recherche a été établi pour toutes les revendications

| Lieu de la recherche | Date d'achèvement de la recherche | Examinateur |
|---|---|---|
| LA HAYE | 03-06-1987 | NUIJTEN E.M. |

| | **DOCUMENTS CONSIDERES COMME PERTINENTS** | | Page 2 |
|---|---|---|---|

| Catégorie | Citation du document avec indication, en cas de besoin, des parties pertinentes | Revendication concernée | CLASSEMENT DE LA DEMANDE (Int. Cl.⁴) |
|---|---|---|---|
| A | GB-A-2 026 704 (SOCIETE ANONYME ALSTHOM-ATLANTIQUE)<br>* Abrégé; figure * | 1,4,6 | |
| | ----- | | |
| | | | **DOMAINES TECHNIQUES RECHERCHES (Int. Cl.⁴)** |

Le présent rapport de recherche a été établi pour toutes les revendications

| Lieu de la recherche | Date d'achèvement de la recherche | Examinateur |
|---|---|---|
| LA HAYE | 03-06-1987 | NUIJTEN E.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03.82